# EUROPÄISCHE PATENTANMELDUNG

(11) **EP 2 110 220 A2**
(43) Veröffentlichungstag der Anmeldung: **21.10.2009**
(21) Anmeldenummer: 09450077.4
(22) Anmeldetag: 10.04.2009
(51) Int. Cl.: B29C 33/20, B29C 33/22, B29C 44/42

(54) **Vorrichtung zur Herstellung von Formteilen, insbesondere von Schaumformteilen**

(30) Priorität: 14.04.2008 AT 5852008
(71) Anmelder: Fill Gesellschaft m.b.H., 4942 Gurten (AT)
(72) Erfinder: Danninger, Norbert, 447 Andorf (AT)
(74) Vertreter: Hübscher, Helmut

(57) **Zusammenfassung**

Die Erfindung betrifft eine Vorrichtung zur Herstellung von Formteilen, insbesondere von Schaumformteilen, mit wenigstens zwei Formenhälften (2, 3), die je einem oberen (4) und einem unteren (5), in einem gemeinsamen Gestell (6) angeordneten, Formaufspannrahmen (4, 5) zugeordnet sind, wobei ein Formaufspannrahmen (4, 5) mit einem Antrieb (7) gegen den anderen Formaufspannrahmen aus einer die Formflächen (8) der Formenhälften (2, 3) freigebenden Offenlage in eine Verschlusslage verlagerbar ist, in der die wenigstens zwei Formenhälften gegeneinander angestellt sind und wobei die beiden Formaufspannrahmen (4, 5) vorzugsweise derart antriebsverbunden sind, dass beide mit dem Antrieb (7) gemeinsam wechselweise entlang ihrer Bewegungsbahnen synchron zueinander oder auseinander verlagerbar sind. Um vorteilhafte Konstruktionsverhältnisse zu schaffen, wird vorgeschlagen, dass der Antrieb (7) wenigstens einen, vorzugsweise nach Art eines zweiarmigen Hebels, insbesondere Kniehebels, ausgebildeten Kurbeltrieb (9) mit bezüglich der Kurbelachse (10) diametral gegenüberliegenden Kurbelzapfen (11, 12) umfasst, von denen ein Kurbelzapfen (11) über ein Pleuel (13) mit dem oberen Formaufspannrahmen (4) und der andere Kurbelzapfen (12) über ein Pleuel (14) mit dem unteren Formaufspannrahmen (5) antriebsverbunden ist.

## Beschreibung

Die Erfindung betrifft eine Vorrichtung zur Herstellung von Formteilen, insbesondere von Schaumformteilen, mit wenigstens zwei Formenhälften, die je einem oberen und einem unteren, in einem gemeinsamen Gestell angeordneten, Formaufspannrahmen zugeordnet sind, wobei ein Formaufspannrahmen mit einem Antrieb gegen den anderen Formaufspannrahmen aus einer die Formflächen der Formenhälften freigebenden Offenlage in eine Verschlusslage verlagerbar ist, in der die wenigstens zwei Formenhälften gegeneinander angestellt sind und wobei die beiden Formaufspannrahmen vorzugsweise derart antriebsverbunden sind, dass beide mit dem Antrieb gemeinsam wechselweise entlang ihrer Bewegungsbahnen synchron zueinander oder auseinander verlagerbar sind.

Bekannte Vorrichtungen dieser Art werden üblicherweise in ihrer Offenlage mit Trennmitteln, Textilien, Folien od. dgl. ausgekleidet, und mit einem Kunststoffgemisch befüllt, das anschließend in der Verschlusslage der Formenhälften ausschäumt. Für den Antrieb zum Öffnen und Schließen der Formenhälften finden beispielsweise Antriebe Verwendung, bei denen der obere Formaufspannrahmen in zwei gegenüberliegenden Kulissenführungen des Maschinenständers verschiebbar geführt und über Pleuelstangen mit den Enden von Schwenkhebeln eines Zentralantriebs verbunden ist (DE 10 2006 022 546 A1). Gemäß dieser Vorrichtung wird die obere der beiden Formenhälften in der Kulissenführung mittels des Kurbeltriebes geführt zwischen der Verschlusslage und der Offenlage verlagert, wobei der Kurbeltrieb die zwei Formenhälften in der Verschlusslage nach Art einer Kniehebelpresse gegeneinander verspannt.

Weitere Vorrichtungen, bei denen die Antriebsvorrichtung von einem Kurbelantrieb gebildet wird, sind beispielsweise aus der EP 1 306 180 A1 der JP 60115419 A und der JP 2001179790 A bekannt. Diese Vorrichtungen offenbaren Vorrichtungen zur Herstellung von Formteilen bei denen ein Formaufspannrahmen mit dem Kurbeltrieb aus einer die Offenlage bildenden unteren Totpunktstellung des Kurbeltriebs in eine die Verschlusslage bildende obere Totpunktstellung des Kurbeltriebes verlagerbar ist. All diesen Vorrichtungen ist allerdings der Nachteil zu eigen, dass beim Verfahren der Formaufspannrahmen aus der Verschlussstellung in die Offenstellung stets ein erheblicher Energieeinsatz zum Überwinden der potentiellen Energie der doch recht schweren Maschinenteile erforderlich ist. Zudem besitzen die bekannten Vorrichtungen oft nicht unerhebliche Öffnungs- und Schließzeiten, was in der Produktion verlängerte Taktzeiten zur Folge hat.

Aus der DE 2 060 478 A ist eine Vorrichtung zur Herstellung von Formteilen bekannt, bei der die beiden Formaufspannrahmen derart antriebsverbunden sind, dass beide mit dem Antrieb gemeinsam wechselweise entlang ihrer Bewegungsbahnen synchron zueinander oder auseinander verlagerbar sind. Bei dieser Konstruktion sind allerdings sehr hohe Antriebskräfte erforderlich, um die beiden Formhälften in ihrer Schließstellung zu halten.

Ausgehend von einer Vorrichtung der eingangs geschilderten Art liegt der Erfindung die Aufgabe zugrunde eine Vorrichtung zur Herstellung von Formteilen zu schaffen, die einen gegenüber dem Stand der Technik verringerten Energieeinsatz zum Verfahren der Formenhälften aus der Verschlusslage in die Offenlage bzw. aus der Offenlage in die Verschlussstellung erfordert und dabei eine verkürzte Öffnungs- bzw. Schließzeit bei vereinfachtem Aufbau ermöglicht.

Die Erfindung löst diese Aufgabe dadurch, dass der Antrieb zum Schließen der beiden Formhälften wenigstens einen, vorzugsweise nach Art eines zweiarmigen Hebels, insbesondere Kniehebels, ausgebildeten Kurbeltrieb mit bezüglich der Kurbelachse diametral gegenüberliegenden Kurbelzapfen umfasst, von denen ein Kurbelzapfen über ein Pleuel mit dem oberen Formaufspannrahmen und der andere Kurbelzapfen über ein Pleuel mit dem unteren Formaufspannrahmen antriebsverbunden ist.

Damit wird in einfacher Weise eine Möglichkeit geschaffen die Formaufspannrahmen möglichst energieeffizient aus ihrer Offenstellung in die Verschlusslage zu verlagern, wobei zum Verlagern lediglich die Reibungskräfte im Antrieb überwunden werden müssen. Der obere und der untere Formteil halten sich dadurch, dass beide Formaufspannrahmen derart antriebsverbunden sind, dass sie mit dem Antrieb über den Kurbeltrieb synchron gegeneinander oder auseinander verlagerbar sind, derart im Gleichgewicht, dass beim Verlagern der beiden Formteilhälften zueinander oder auseinander lediglich der Gewichtsunterschied der beiden Formaufspannrahmen, samt Formhälften und gegebenenfalls von Formteilen, überwunden werden muss. Beide Formaufspannrahmen legen somit beim Öffnen und Schließen den gleichen Weg zurück, wodurch sich die für den Öffnungs- bzw. Schließvorgang erforderliche Taktzeit halbiert. Neben den Reibungskräften ist vom Antrieb vordringlich die Schließkraft aufzubringen, die allerdings wegen der doppelten Kniehebelwirkung verhältnismäßig gering ist.

Mit der Erfindung wird in einfacher Weise eine Möglichkeit geschaffen mit einem Drehantrieb für die Kurbel die Formhälften bei einer Verlagerung der Kurbel um 180° gegeneinander aus ihrer Verschlussstellung in ihre Offenstellung, und umgekehrt, zu verlagern, wobei die beiden Formhälften zudem in ihrer Verschlussstellung durch die beiden als Kniehebel wirkenden Kurbeltriebe gegeneinander verspannt werden. Erfindungsgemäß werden somit zwei Kurbeltriebe mit einem Antrieb derart gekoppelt, dass sie die beiden Formhälften wechselweise auseinander oder zueinander verlagern bzw. in der Verschlussstellung gegeneinander durch die Kniehebelwirkung der beiden Kurbeltriebe verspannen. Für kompakte Bauverhältnisse liegen die einem Kurbeltrieb zugeordneten Pleuel in einer Ebene. Dies beschränkt dann allerdings den freien Drehwinkel des Kurbeltriebes auf unter 360°.

Um die Formhälften vereinfacht beschicken, warten bzw. auswechseln zu können, empfiehlt es sich, wenn wenigstens einer der Formaufspannrahmen gegenüber dem Gestell um eine horizontale Achse schwenkantreibbar gelagert ist. Damit kann der Formaufspannrahmen und somit die zugeordnete Formhälfte nach einem Öffnen der Form in Richtung zu einem Beschickungsbereich bzw. Wartungsbereich hinverschwenkt werden. Eine weitere Verbesserung ergibt sich dabei, wenn beide Formaufspannrahmen gegenüber dem Gestell um horizontale Achsen gegensinnig schwenkantreibbar gelagert sind, womit sich beide Formaufspannrahmen gleichermaßen zu einem Beschickungs- bzw. Wartungsbereich hin verlagern lassen.

Eine besonderes einfache und robuste Vorrichtung zur Herstellung von Formteilen wird geschaffen, wenn dem Gestell, vorzugsweise seitlich der Formaufspannrahmen, Führungen, insbesondere Gleit- oder Kulissenführungen, für die Formaufspannrahmen zugehören. Diese Führungen, beispielsweise Geradführungen, nehmen die Formaufspannrahmen auf, wobei der Antrieb für die Formaufspannrahmen vorzugsweise im Bereich bzw. entlang der Führungsachse angeordnet ist, um möglichst keine Querkräfte in die Führungen bzw. in die Formhälften einzuleiten. In diesem Fall empfiehlt es sich, wenn jeder Führung je ein zweiarmiger Hebel samt zugehöriger Pleuel vorgesehen ist, von denen je eines auf dem oberen und das andere auf dem unteren Formaufspannrahmen angreift. Die Führungen können vorzugsweise zu einem Führungsrahmen verbunden sein.

Zur Beschickung der Vorrichtung kann die gesamte Vorrichtung gegebenenfalls gegen einen Beschickungs- oder Wartungsbereich hin geneigt werden, wozu die Führungen bzw. der Führungsrahmengegenüber dem Gestell vorzugsweise um eine horizontale Achse schwenkangetrieben gelagert sind bzw. ist. Im vorliegenden Fall ergeben sich vereinfachte Konstruktionsverhältnisse und geringe Antriebskräfte für ein derartiges Verschwenken für den Fall, dass die Schwenkachse zumindest nahezu im Schwerpunkt der zu verschwenkenden, die Formaufspannrahmen, die Schaumformen und die Antriebe aufnehmenden Führungen liegt.

Ein wesentliches Merkmal der Erfindung ist es, mit einem Kurbeltrieb beide Formaufspannrahmen synchron zueinander zu bewegen und gegebenenfalls zueinander verspannen. Dies hat insbesondere den Vorteil, dass die Schließkraft wegen der Kniehebelwirkung nur verhältnismäßig geringe Antriebskräfte erfordert. Mit den erfindungsgemäßen Vorrichtungen können somit große Verschlusskräfte mit geringen Antriebskräften bereitgestellt werden.

Umfasst die Kurbel eine Kurbelscheibe, welche einerseits im Kurbelabstand von der Kurbelachse den Kurbelzapfen des einen Pleuels in einem Zapfenlager aufnimmt und anderseits den Kurbelzapfen des anderen Pleuels in einer bogenförmigen Zapfenführung aufnimmt, so kann beispielsweise in einfacher Weise der Hub zwischen beiden Formenhälften variiert werden. Dazu kann der in der Zapfenführung gelagerte Kurbelzapfen gegebenenfalls in der jeweiligen Lage fixierbar sein. Insbesondere ist es allerdings von Vorteil, wenn dieser Kurbelzapfen in der Zapfenführung frei verschiebbar gelagert ist, also die Zapfenführung eine Art Kulissenführung für den Kurbelzapfen bildet. Ist die Zapfenführung in der Kurbelachse bogenförmig, vorzugsweise um die Kurbelachse kreisbogenförmig, verlaufend ausgebildet, wobei das eine Zapfenführungsende dem anderen Zapfenlager bezüglich der Kurbelachse, vorzugsweise diametral, aber nicht zwingend mit gleichem Abstand (Radius) zur Kurbelachse, angeordnet ist, so kann damit beispielsweise Folgendes erreicht werden: Wird die Kurbelscheibe in einer Richtung verlagert, in welcher der Kurbelzapfen an der Zapfenführung diametral zum anderen Zapfen anliegt, so werden die beiden Formenhälften synchron zueinander verlagert und gegeneinander geklemmt. Erfolgt eine Bewegung in die andere Drehrichtung, in welcher der der Zapfenführung zugeordnete Kurbelzapfen, insbesondere schwerkraftbedingt, die Zapfenführung entlang gleitet, bleibt die Lage, beispielsweise des unteren Formaufspannrahmens, vorzugsweise unverändert, wohingegen der obere Formaufspannrahmen zum unteren Aufspannrahmen hin abgesenkt wird. In dieser Lage ist eine Beschickung, Reinigung bzw. Wartung der beiden Formenhälften ergonomisch besonders vorteilhaft möglich.

Besonders einfache Konstruktionsverhältnisse ergeben sich, wenn ein gestellfester Antrieb für den Kurbeltrieb vorgesehen ist. Sind der Führung, vorzugsweise jeder Führung, zwei Verbindungselemente, beispielsweise Absteckbolzen, -klauen, Bremsen od. dgl. zugeordnet, die wechselweise das Gestell mit dem um die horizontale Achse schwenkbar im Gestell gelagerten Führungen oder die Führungen mit dem Kurbeltrieb, insbesondere der Kurbelscheibe drehfest verbinden, muss für ein Schwenken der Führungen bzw. ein drehen des Kurbeltriebes nur ein Antrieb vorgesehen werden. Ist der Rahmen mit den Führungen, insbes. einem Führungsträger oder Führungsrahmen drehfest verbunden, so kann mit dem Antrieb der Kurbeltrieb verschwenkt werden und können die beiden Formteile zueinander oder auseinander verlagert werden. Ist hingegen die Führung bzw. sind hingegen die Führungen, bzw. die Führungsträger oder der Führungsrahmen, mit dem Kurbeltrieb verbolzt, so kann mit demselben Antrieb (einer je Kurbeltrieb) auch ein Verschwenken von Führungen, Spannrahmen und Formenhälften gemeinsam vorgenommen werden.

Dazu empfiehlt es sich, wenn der Antrieb mit der Kurbelscheibe über einen Riementrieb oder ein Zahnradgetriebe antriebsverbunden ist und wenn die Führungen und die Kurbelscheibe auf der gemeinsamen Achse gelagert sind. Die Führungen, die seitlich der Formaufspannrahmen angeordnet sind und in die die Formaufspannrahmen eingreifen, können dabei zu einem Formaufspannrahmen untereinander verbunden sein.

In der Zeichnung ist die Erfindung anhand eines Ausführungsbeispiels schematisch dargestellt: Es zeigen
- Fig. 1: eine erfindungsgemäße Vorrichtung in Offenlage,
- Fig. 2: die Vorrichtung aus Fig. 1 im Schnitt nach der Linie II-II,
- Fig. 3: die Vorrichtung aus Fig. 2 in Schließlage
- Fig. 4: die Vorrichtung aus Fig. 2 in Beschickungslage,
- Fig. 5: die Vorrichtungen aus den Fig. 4 in Schrägansicht,
- Fig. 6: eine Konstruktionsvariante einer erfindungsgemäßen Vorrichtung in Schrägansicht,
- Fig. 7: die Vorrichtung aus Fig. 6 in Vorderansicht und vergrößertem Maßstab,
- Fig. 8: ein Detail des Antriebs der Vorrichtung aus Fig. 6 in vergrößertem Maßstab und
- Fig. 9: bis 11 ein Funktionsschema der Vorrichtung aus Fig. 6 und 7 in schematischer Seitenansicht.

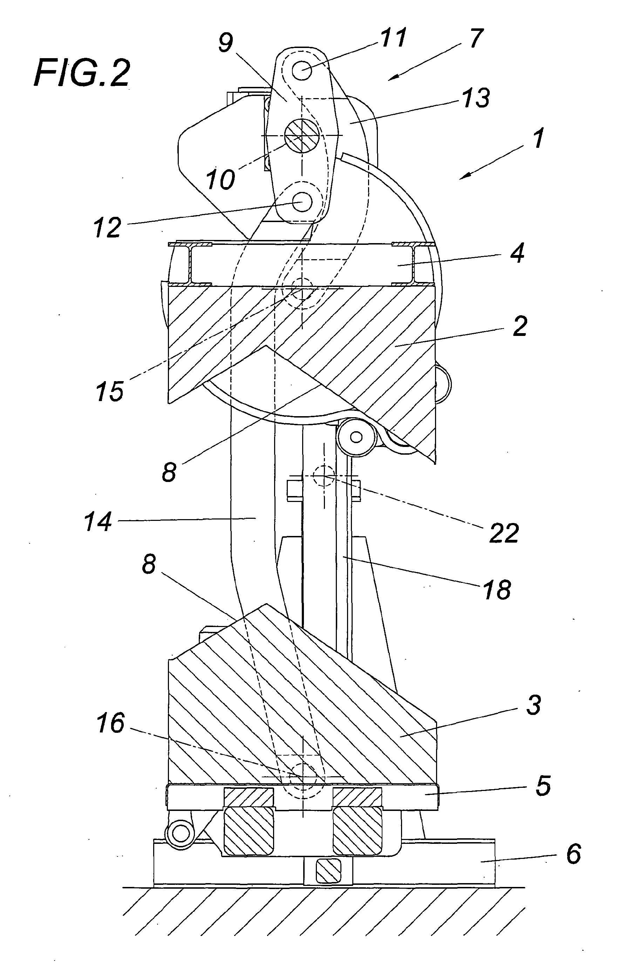

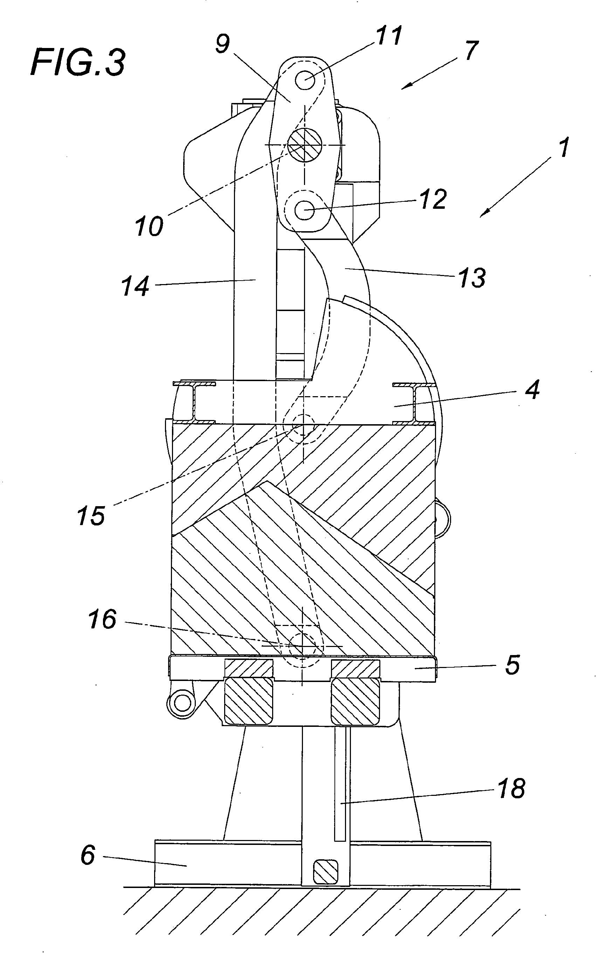

Eine Vorrichtung 1 zum Herstellen von Schaumformteilen umfasst zwei Formenhälften 2, 3 die je einem oberen 4 und einem unteren 5 in einem gemeinsamen Gestell 6 angeordneten Formaufspannrahmen 4, 5 zugeordnet sind. Dabei sind beide Formaufspannrahmen 4, 5 mit ihren zugeordneten Formenhälften 2, 3 mit einem Antrieb 7 gegeneinander aus einer die Formflächen 8 der Formenhälften 2, 3 freigebenden Offenlage (Fig. 2) in eine Verschlusslage (Fig. 3) verlagerbar, in der die beiden Formenhälften 2, 3 gegeneinander angestellt sind. Die beiden Formaufspannrahmen 4, 5 sind dabei mit dem Antrieb 7 derart antriebsverbunden, dass beide mit dem Antrieb 7 gemeinsam entlang ihrer Bewegungsbahnen, im dargestellten Beispiel entlang einer Geraden, synchron gegeneinander oder auseinander verlagerbar sind.

Im vorliegenden Fall umfasst der Antrieb 7 beidseits der Formaufspannrahmen 4, 5 angeordnete, nach Art zweiarmiger Hebel ausgebildete, Kurbeltriebe 9 mit bzgl. der Kurbelachse 10 diametral gegenüberliegenden Kurbelzapfen 11, 12, von denen ein Kurbelzapfen 11 über ein Pleuel 13 mit dem oberen Formaufspannrahmen 4 und der andere Kurbelzapfen 12 über ein Pleuel 14 mit dem unteren Formaufspannrahmen 5 antriebsverbunden ist. Die jedem Kurbeltrieb 9 zugeordneten Pleuel 13, 14 liegen in einer Ebene, wodurch der freie Drehwinkel der Kurbelwelle auf unter 360° beschränkt ist.

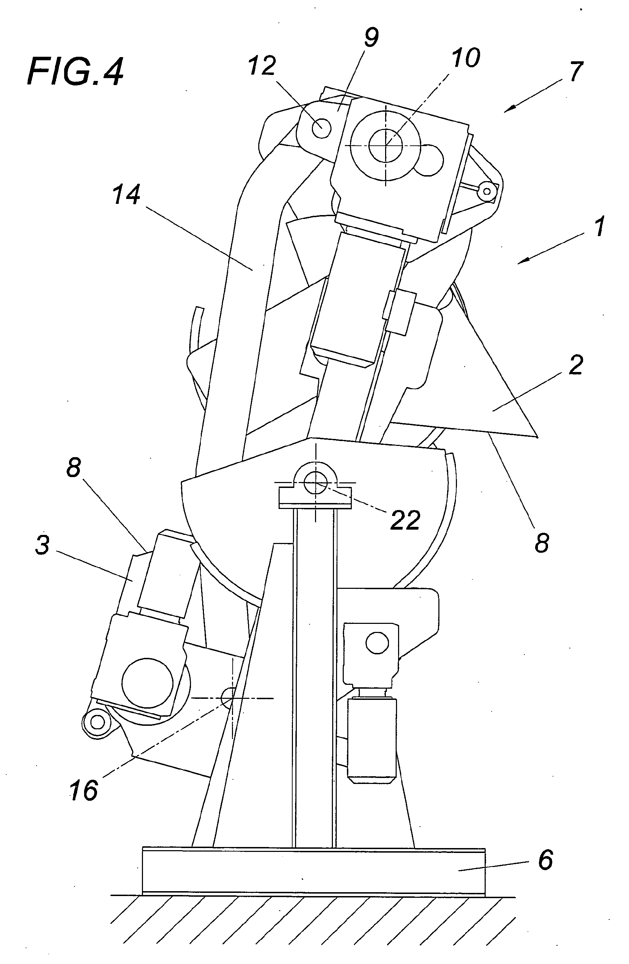

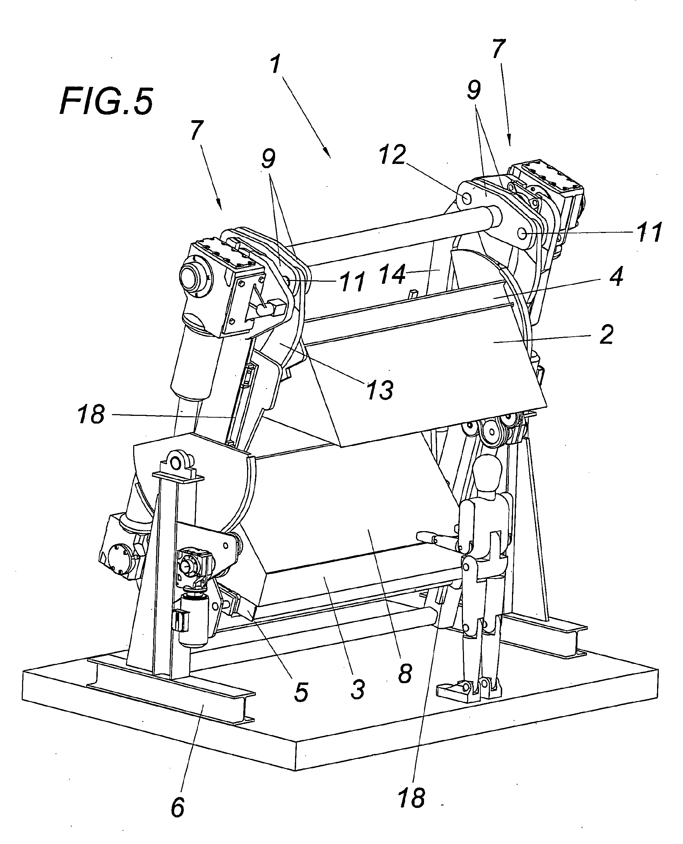

Die beiden Formaufspannrahmen 4, 5 sind gegenüber dem Gestell 6 um je eine horizontale Achse 15, 16, welche in den vorliegenden Beispielen mit den Angriffpunkten der Pleuel am Aufspannrahmen zusammenfallen, mit einem eigenen Schwenkantrieb 17 schwenkantreibbar gelagert, wobei beide Formaufspannrahmen 4, 5 gegenüber dem Gestell 6 um die horizontalen Achsen 15, 16 gegensinnig schwenkbar gelagert sind (Fig.4, 5). Damit könne die Formaufspannrahmen 4, 5 und somit die zugeordneten Formhälften 2, 3 nach einem Öffnen der Vorrichtung zu einem Beschickungsbereich bzw. Wartungsbereich hinverschwenkt werden und sind somit einfacher zugänglich.

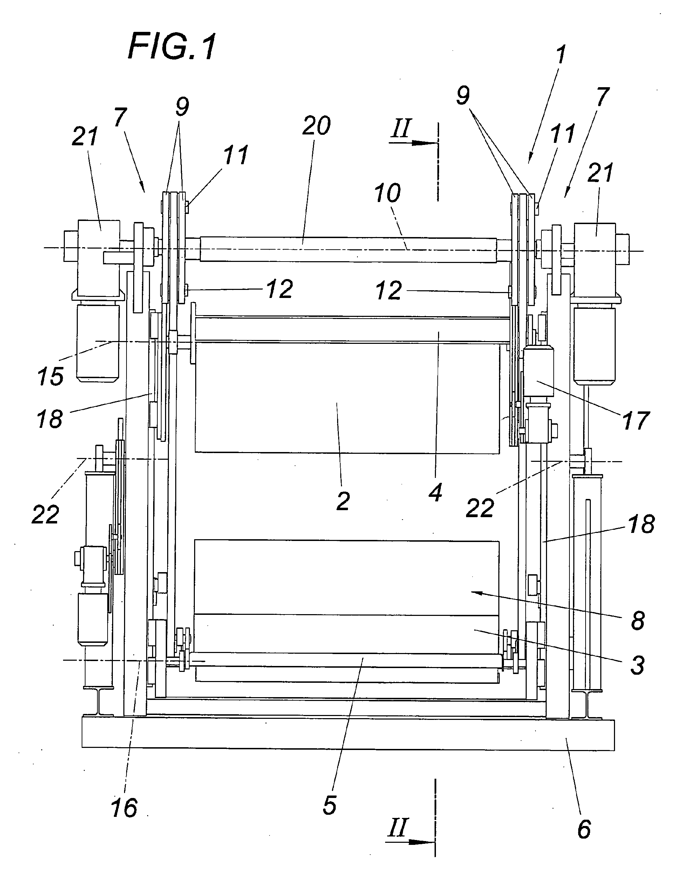

Dem Gestell 6 gehören seitlich der Formaufspannrahmen 4, 5 Führungen 18, im vorliegenden Fall Geradführungen, für die Formaufspannrahmen 4, 5 zu, wobei der nach Art eines zweiarmigen Hebels ausgebildete Kurbeltrieb 9 oberhalb dieser Führungen 18 angeordnet ist und wobei die beiden Kurbeltriebe 9 über eine Kurbelwelle 20 untereinander antriebsverbunden sind und für die Kurbelwelle zwei Antriebe 21 vorgesehen sind (Fig. 1-5). Dadurch, dass beide Formaufspannrahmen 4, 5 synchron gegeneinander oder auseinander verlagert werden halbiert sich zudem die für den Öffnung- bzw. Schließvorgang erforderliche Taktzeit und werden sämtliche Schließkräfte vom Kurbeltrieb 9 aufgenommen, was eine verhältnismäßig leichte Konstruktion des Gestells 6 bzw. der Vorrichtung 1 gestattet.

Des Weiteren sind die Führungen 18 gegenüber dem Gestell 6 um eine horizontale Achse 22 schwenkangetrieben gelagert, womit sich die Formenhälften 2, 3 zu einem Beschickungs- bzw. Wartungsbereich hin verlagern lassen.

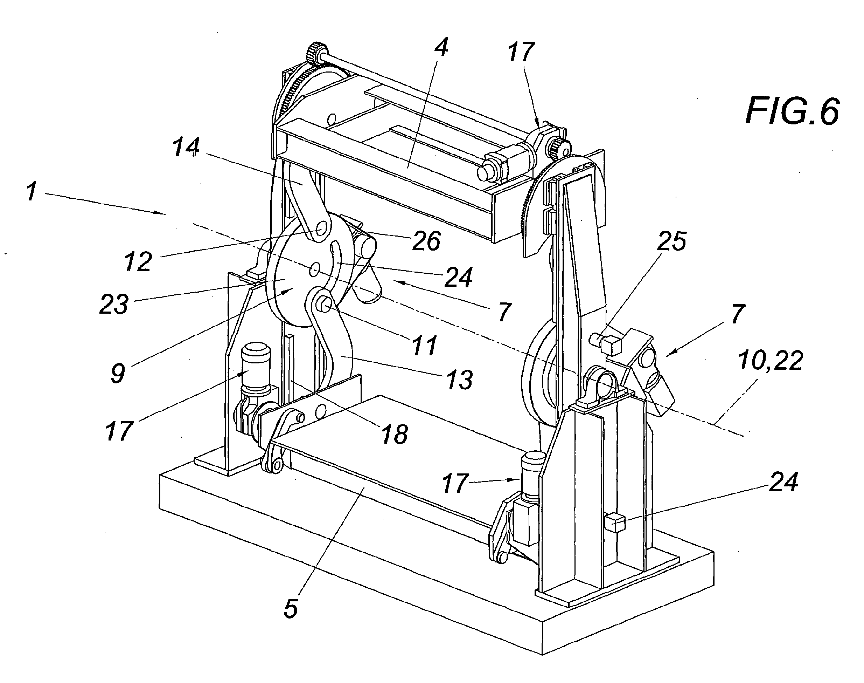

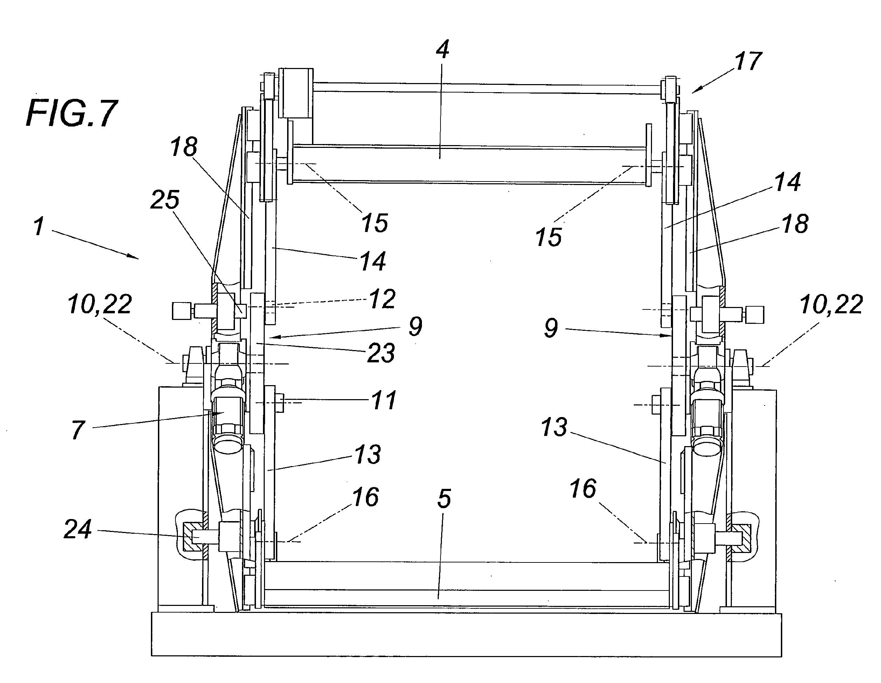

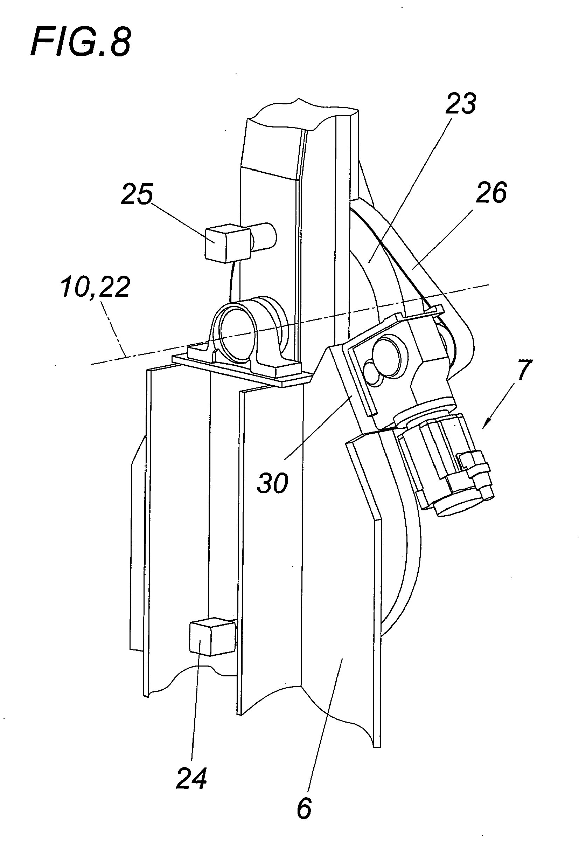

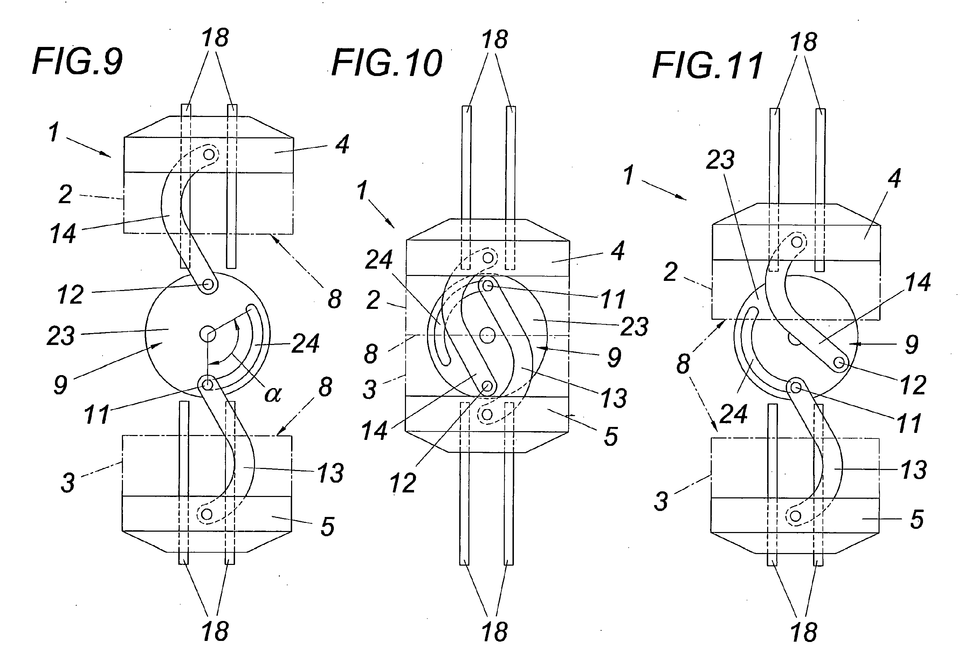

Im Folgenden wir auf das Ausführungsbeispiel nach den Fig. 6 bis 11 Bezug genommen. Gemäß diesem Ausführungsbeispiel umfasst die Kurbel eine Kurbelscheibe 23, die einerseits im Kurbelhubabstand von der Kurbelachse 10 den Kurbelzapfen 12 des einen Pleuels 14 in einem Zapfenlager aufnimmt. Anderseits nimmt diese Kurbelscheibe 23 den Kurbelzapfen 11 des anderen Pleuels 13 in einer bogenförmigen, insbesondere um die Kurbelachse 10 kreisbogenförmig verlaufenden, Zapfenführung 24 auf. Dabei ist das eine Zapfenführungsende dem Zapfenlager des Kurbelzapfens 12 bezüglich der Kurbelachse 10 diametral gegenüberliegend (siehe insbesondere Fig. 6 und 10). Des Weiteren ist ein gestellfester Antrieb 7 für den Kurbeltrieb 9 vorgesehen, wobei der Antrieb 7 mit der Kurbelscheibe 23 über einen Riementrieb 26 antriebsverbunden ist und die Kurbelscheibe 23 somit als Riemenscheibe ausgebildet ist. Die Führungen 18 und die Kurbelscheibe 23 sind auf der gemeinsamen Achse 22 gelagert. Damit kann ein Führungsrahmen, der von den Führungen 18 aufgespannt wird und in dem die Formenhälften 2, 3 im Formaufspannrahmen 4, 5 gelagert und geführt sind um die Achse 10, 22 mit dem Antrieb 7 verschwenkt werden. Dazu ist es beispielsweise am Gestell 6 eine Konsole 30 (Fig. 8) angebracht, an der einerseits der Antrieb 7 befestigt ist und die anderseits mit ihrer der Befestigungsfläche für den Antrieb 7 gegenüberliegenden Fläche einen Schwenkanschlag für die Führungen 18 bildet, um ein übermäßiges Verschwenken und insbesondere ein Abkippen der Vorrichtung zu einem Bedienpersonal hin zu vermeiden.

Des Weiteren sind der Führung 18 je Seite zwei Absteckbolzen 24, 25 zugeordnet, die wechselweise das Gestell 6 mit den um die horizontale Achse 22 schwenkbar im Gestell gelagerten Führungen 18 oder die Führungen 18 mit dem Kurbeltrieb, insbesondere der Kurbelscheibe 23 verbolzt. Somit kann auf einfache Weise mit einem Antrieb 7 wahlweise der Führungsrahmen bzw. können die Führungen verschwenkt werden oder können die Aufspannrahmen und somit die Formhälften zueinander verlagert werden.

Die Fig. 9 zeigt eine erfindungsgemäße Vorrichtung mit den beiden Formhälften 2, 3 in ihrer Offenlage. Wird die Kurbelscheibe 23 gegen den Uhrzeigersinn um 180°, bzw. nicht ganz 180°, verschwenkt (Fig. 10), so werden die beiden Formhälften in ihre Verschlusslage gebracht, und sind die beiden Formhälften 2, 3, in dieser Verschlusslage mit dem als doppelter Kniehebel wirkenden Kurbeltrieb gegeneinander verspannt. Wird die Kurbelscheibe 23 aus der Stellung in Fig. 9 allerdings im Uhrzeigersinn um einen Winkel α verschwenkt, so bleibt der untere Formaufspannrahmen 5 schwerkraftbedingt in seiner unteren Ausgangslage, wobei der Kurbelzapfen 11 die Zapfenführung 24 bis zum anderen Führungsende entlang gleitet. Der obere Formaufspannrahmen wird allerdings zum unteren hin abgesenkt. In diese Lage können vorteilhafte Wartungsarbeiten bzw. kann ein vorteilhaftes Reinigen oder Beschicken der beiden Formenhälften erfolgen.

## Patentansprüche

1. Vorrichtung zur Herstellung von Formteilen, insbesondere von Schaumformteilen, mit wenigstens zwei Formenhälften (2, 3), die je einem oberen (4) und einem unteren (5), in einem gemeinsamen Gestell (6) angeordneten, Formaufspannrahmen (4, 5) zugeordnet sind, wobei ein Formaufspannrahmen (4, 5) mit einem Antrieb (7) gegen den anderen Formaufspannrahmen aus einer die Formflächen (8) der Formenhälften (2, 3) freigebenden Offenlage in eine Verschlusslage verlagerbar ist, in der die wenigstens zwei Formenhälften gegeneinander angestellt sind und wobei die beiden Formaufspannrahmen (4, 5) vorzugsweise derart antriebsverbunden sind, dass beide mit dem Antrieb (7) gemeinsam wechselweise entlang ihrer Bewegungsbahnen synchron zueinander oder auseinander verlagerbar sind **dadurch gekennzeichnet, dass** der Antrieb (7) Antrieb zum Schließen der beiden Formhälften (2, 3) wenigstens einen, vorzugsweise nach Art eines zweiarmigen Hebels, insbesondere Kniehebels, ausgebildeten Kurbeltrieb (9) mit bezüglich der Kurbelachse (10) diametral gegenüberliegenden Kurbelzapfen (11, 12) umfasst, von denen ein Kurbelzapfen (11) über ein Pleuel (13) mit dem oberen Formaufspannrahmen (4) und der andere Kurbelzapfen (12) über ein Pleuel (14) mit dem unteren Formaufspannrahmen (5) antriebsverbunden ist.

2. Vorrichtung nach Anspruch 1, **dadurch gekennzeichnet, dass** wenigstens einer der beiden Formaufspannrahmen (4, 5) gegenüber dem Gestell (6) um eine horizontale Achse (15, 16) schwenkantreibbar gelagert ist.

3. Vorrichtung nach einem der Ansprüche 1 oder 2, **dadurch gekennzeichnet, dass** dem Gestell (6), vorzugsweise seitlich der Formaufspannrahmen (4, 5), Führungen (18), insbesondere Gleit- oder Kulissenführungen, für die Formaufspannrahmen (4, 5) zugehören.

4. Vorrichtung nach Anspruch 3, **dadurch gekennzeichnet, dass** die Führungen (18) gegenüber dem Gestell (6) um eine horizontale Achse (22) schwenkangetrieben am Gestell (6) gelagert sind.

5. Vorrichtung nach einem der Ansprüche 1 bis 4, **dadurch gekennzeichnet, dass** die Kurbel eine Kurbelscheibe (23) umfasst, die einerseits im Kurbelhubabstand von der Kurbelachse (10) den Kurbelzapfen (12) des einen Pleuels (14) in einem Zapfenlager aufnimmt und anderseits den Kurbelzapfen (11) des anderen Pleuels (13) in einer bogenförmigen Zapfenführung (24) aufnimmt.

6. Vorrichtung nach Anspruch 5, **dadurch gekennzeichnet, dass** die Zapfenführung (24) in der Kurbelscheibe (23) um die Kurbelachse (10) bogenförmig, vorzugsweise kreisbogenförmig, verlaufend ausgebildet ist, wobei das eine Zapfenführungsende dem Zapfenlager bezüglich der Kurbelachse (10), vorzugsweise diametral, gegenüberliegt (Fig. 6, 10).

7. Vorrichtung nach einem der Ansprüche 1 bis 6, **dadurch gekennzeichnet, dass** ein gestellfester Antrieb (7) für den Kurbeltrieb (9) vorgesehen ist.

8. Vorrichtung nach Anspruch 7, **dadurch gekennzeichnet, dass** der Antrieb (7) mit der Kurbelscheibe (23) über einen Riementrieb oder ein Zahnradgetriebe antriebsverbunden ist.

9. Vorrichtung nach einem der Ansprüche 4 bis 8**, dadurch gekennzeichnet, dass** die Führungen (18) und die Kurbelscheibe (23) auf koaxialen Achsen (10, 22) gelagert sind.

10. Vorrichtung nach einem der Ansprüche 1 bis 9, **dadurch gekennzeichnet, dass** der Führung (18) zwei Verbindungselemente, insbesondere Absteckbolzen (24, 25), zugeordnet sind, die wechselweise das Gestell (6) mit dem um die horizontale Achse (22) schwenkbar im Gestell (6) gelagerten Führungen (18) oder die Führungen (18) mit dem Kurbeltrieb, insbesondere mit der Kurbelscheibe (23), drehfest verbinden.
